# EUROPEAN PATENT SPECIFICATION

(11) **EP 3 914 406 B1**
(45) Date of publication and mention of the grant of the patent: **17.12.2025**
(21) Application number: 20876985.1
(22) Date of filing: 14.08.2020
(51) Int. Cl.: B21D 22/14, B21D 53/26, B60B 3/02, B21D 53/30, B60B 21/02, B60B 3/00

(54) **A PROCESS FOR MANUFACTURING TUBELESS VEHICLE WHEEL WITHOUT WELDING**
VERFAHREN ZUR HERSTELLUNG EINES SCHLAUCHLOSEN FAHRZEUGRADES OHNE SCHWEISSUNG
PROCÉDÉ DE FABRICATION D'UNE ROUE DE VÉHICULE SANS CHAMBRE À AIR SANS SOUDAGE

(30) Priority: 17.10.2019 IN 201941042042
(43) Date of publication of application: 01.12.2021
(73) Proprietor: Wheels India Limited, Tamilnadu (IN)
(72) Inventor: VIJAYARAGHAVAN, Shriram, Chennai 600050 (IN); THIYAGARAJAN, Dr. Sundararajan, Chennai 600050 (IN); RAMASAMY, Muthuraj, Chennai 600050 (IN); KINGSTON, Benthambu, Chennai 600050 (IN)
(74) Representative: JD&P Patent Attorneys Joanna Dargiewicz & Partners
(86) International application number: PCT/IB2020/057660
(87) International publication number: WO 2021/074707

(56) References cited:
- WO-A1-2019/048939
- WO-A2-2005/065049
- GB-A- 2 055 065
- JP-A- 2002 307 110
- US-A- 3 264 719
- US-A- 4 637 112
- US-A- 5 832 608
- US-A1- 2008 141 532
- US-A1- 2009 278 399

## Description

### FIELD OF INVENTION

The embodiment herein generally relates to the field of manufacturing a tubeless vehicle wheel without welding. More specifically, the embodiment provides a process for manufacturing tubeless vehicle wheel without welding using a hoop.

### BACKGROUND AND PRIOR ART

Conventional methods of manufacturing a tubeless vehicle wheel typically involve joining separately formed components such as a disc and a rim through welding. These wheels generally include a central opening for mounting, vent holes surrounding the central opening, a disc profile, a nave region, bead seats, a pair of flanges, and a well region. Welding is typically performed at the joint between the disc and the outboard flange of the rim.

For example, Indian Patent No. 302402 discloses a method in which a disc and a rim are formed separately and joined together by welding to produce a tubeless vehicle wheel. While this approach enables the manufacture of functional wheels, it involves multiple process steps and relies on welding to integrate the structural components. Such welding-based methods suffer from several disadvantages, including the introduction of localized thermal stress, reduced fatigue life at the weld interface, and increased manufacturing cost due to the need for separate forming and joining operations.

WO 2019/048939 A1 discloses a method for manufacturing a vehicle wheel with a single work piece comprising the steps of, placing a metal band in a mandrel provided at a machining tool; forming the metal band/ work piece for making a desired length of rim and a wheel disc; wherein size of the rim and the wheel disc can be formed according to the requirement; spinning a nave portion of the work piece for shaping the wheel disc; wherein the nave spinning of the work piece can be utilized to fix an inner width of the wheel; spinning the work piece for making a disc flange and a gutter portion of the wheel; rolling one end of the rim portion of the work piece that is connected to the wheel disc portion, to form the required gutter portion of predetermined shape and thickness; spinning the rim portion of the work piece further to form a tire seat and well area; forming a flange flare by bending another end of the rim portion; forming the flange portion of the wheel rim by bending the flange flare to desired shape; machining flange edge, nave and bore to avoid sharp edges; reaming of bolt holes and chamfering bores at the wheel disk portion of the wheel

To overcome these limitations, one-piece or single-piece wheels have been developed that eliminate welding and instead rely on forming operations applied to a single metal blank. These approaches offer benefits such as improved structural integrity and manufacturing efficiency. However, existing one-piece wheel manufacturing processes often begin with a cup-shaped or deep-drawn preform, limiting flexibility in defining intermediate geometries such as disc profiles and flanges. Additionally, conventional spinning-only methods frequently produce inconsistent flange shapes, requiring secondary processing to meet dimensional tolerances. Where welding is involved, thermal stress at the joint may reduce fatigue strength.

There remains a need for a method of manufacturing a single-piece tubeless vehicle wheel that begins from a flat metallic hoop, avoids the use of welding, and enables precise formation of intermediate geometries such as disc profiles, nave regions, and flanges. The desired method should reduce process complexity, enhance dimensional control, and eliminate thermal stress issues associated with welded joints, thereby improving both structural integrity and production efficiency.

### OBJECTS OF THE INVENTION

Some of the objects of the present disclosure are described herein below:

A main object of the present invention is to provide a process for manufacturing tubeless vehicle wheel without welding.

Another object of the present invention is to provide a process for manufacturing a tubeless vehicle wheel using a single hoop as a work piece.

Yet another object of the present invention is to provide a process for manufacturing a tubeless vehicle wheel using simple methods.

Still another object of the present invention is to provide a process for manufacturing a tubeless vehicle wheel at low cost.

The other objects and advantages of the present invention will be apparent from the following description when read in conjunction with the accompanying drawings, which are incorporated for illustration of preferred embodiments of the present invention and are not intended to limit the scope thereof.

### SUMMARY OF THE INVENTION

In view of the foregoing, the invention provides a process for manufacturing tubeless vehicle wheel without welding using a hoop as a work piece. The process for manufacturing the tubeless wheel includes providing a hoop having an outboard end, a centre region and an inboard end made of metallic materials. Spinning the outboard end of the hoop to obtain a disc region, then spinning disc end of the disc region to obtain a preform nave region. A forming process is performed on the disc region to obtain a disc profile and a nave region and a forming process is performed on the centre region, inboard end of the hoop to obtain a straight rim profile. Spinning is performed on the outer end of the straight rim profile, and then forming is performed to obtain an outboard flange. Next, spinning is performed on the straight rim profile to obtain a concave rim profile with a preform inboard flange. A spinning process is performed on the concave rim profile to obtain bead seats, and a well region. A forming process is performed on the preform inboard flange to obtain an inboard flange. A plurality of vent holes is provided at the disc profile and a valve hole is provided at the bead seat.

In accordance with an embodiment, a plurality of bolt holes is provided at the nave region. In an embodiment, the plurality of bolt holes is obtained using a punching process.

In accordance with the invention, the outboard flange and the inboard flange are obtained using a press forming process.

In accordance with an embodiment, the vent holes and the valve hole are obtained using a punching process.

In accordance with an embodiment, the disc profile, nave region and the straight rim profile are obtained using a flow forming process.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation.

### BRIEF DESCRIPTION OF DRAWINGS

The detailed description is set forth with reference to the accompanying figures. In the figures, the left-most digit(s) of a reference number identifies the figure in which the reference number first appears. The use of the same reference numbers in different figures indicates similar or identical items.
Fig.1 illustrates a sectional view of hoop 100, according to an embodiment herein;
Fig.2 illustrates sectional view of hoop after spinning process of outboard end of hoop 200, according to an embodiment herein;
Fig.3 illustrates sectional view of hoop after spinning process of disc end of disc region 300, according to an embodiment herein;
Fig.4 illustrates sectional view of hoop after forming process of disc region and centre region 400, according to an embodiment herein;
Fig.5 illustrates sectional view of hoop after spinning process of outer end of straight rim profile 500, according to an embodiment herein;
Fig.6 illustrates sectional view of hoop after spinning process of straight rim profile 600, according to an embodiment herein;
Fig.7 illustrates sectional view of hoop after spinning process of concave rim profile 700, according to an embodiment herein; and
Fig.8 illustrates sectional view of tubeless wheel with vent holes and valve hole 800, according to an embodiment herein;

### LIST OF NUMERALS

- 100 -: Sectional view of hoop
- 101 -: Outboard end
- 102 -: Centre region
- 103 -: Inboard end
- 200 -: Sectional view of hoop after spinning process of outboard end
- 202 -: Disc region
- 203 -: Disc end
- 300 -: Sectional view of hoop after spinning process of disc end
- 301 -: Preform nave region
- 400 -: Sectional view of hoop after forming process of disc region, centre region
- 401 -: Disc profile
- 402 -: Straight rim profile
- 403 -: Nave region
- 404 -: Bolt holes
- 405 -: Outer end of straight rim profile
- 500 -: Sectional view of hoop after spinning process of outer end of straight rim profile
- 502 -: Outboard flange
- 600 -: Sectional view of hoop after spinning process of straight rim profile
- 601 -: Concave rim profile
- 602 -: Preform inboard flange
- 700 -: Sectional view of hoop after spinning process of concave rim profile
- 701 -: Bead seats
- 703 -: Well region
- 704 -: Inboard flange
- 800 -: Sectional view of tubeless wheel
- 801 -: Vent holes
- 802 -: Valve hole

### DETAILED DESCRIPTION OF THE PREFERRED EMBODIMENTS

The embodiments herein and the various features and advantageous details thereof are explained more fully with reference to the non-limiting embodiments and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein.

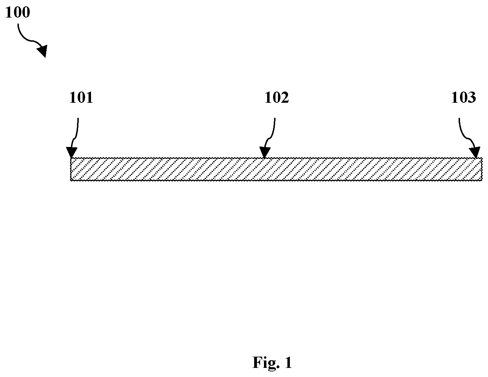

As mentioned above, there is a need for a process for manufacturing tubeless vehicle wheel without welding. The embodiments herein achieve this by providing a process for manufacturing tubeless vehicle wheel without welding using a hoop. Referring now to the drawings, and more particularly to FIGS. 1 through 8, where similar reference characters denote corresponding features consistently throughout the figures, there are shown preferred embodiments.

Fig.1 illustrates a sectional view of a hoop 100. The hoop 100 has an outboard end 101, a centre region 102 and an inboard end 103.

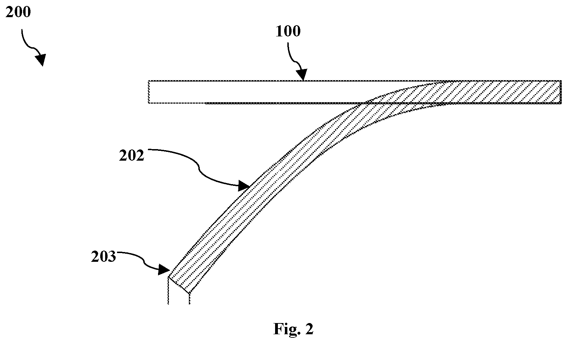

Fig.2 illustrates sectional view of hoop 200 after spinning process of outboard end of hoop 101, according to an embodiment. A spinning process is performed on the outboard end 101 of the hoop 100 for obtaining a disc region 202 with a disc end 203. The size of the disc region can be formed according to requirement.

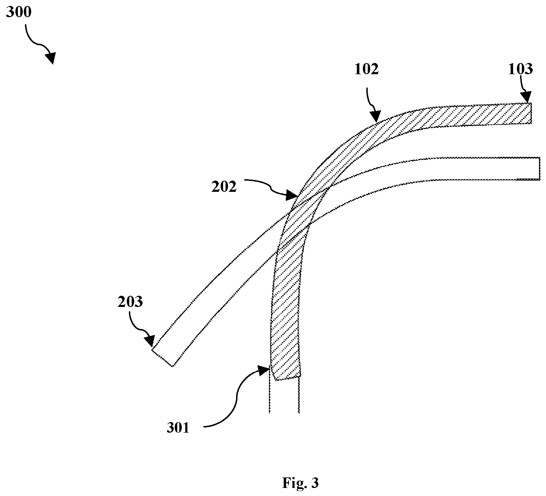

Fig.3 illustrates a sectional view of hoop 300 after spinning process of disc end 203 of disc region 202, according to an embodiment. A spinning process is performed on the disc end 203 of the disc region 202 for obtaining a preform nave region 301.

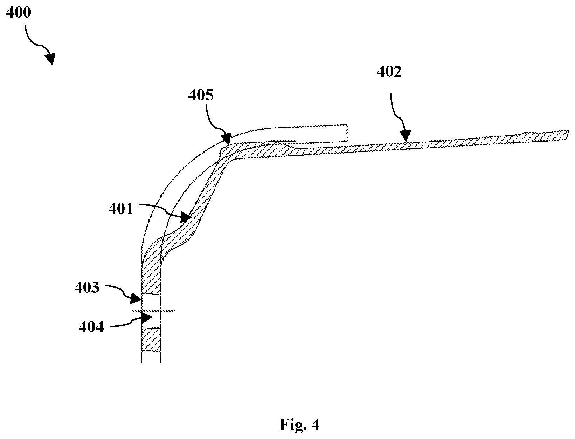

Fig.4 illustrates sectional view of hoop 400 after forming process of disc region 202 and centre region 102, according to an embodiment. A forming process is performed on the disc region 202 for obtaining a disc profile 401 and a nave region 403. A forming process is performed on the centre region 102 and the inboard end 103 for obtaining a straight rim profile 402. The straight rim profile 402 includes an outer end 405. A plurality of bolt holes 404 is provided on the nave region 403. In an embodiment, the plurality of bolt holes 404 is obtained using a punching process. In an embodiment, a flow forming process is performed on the disc region 202 for obtaining a disc profile 401 and a nave region 403 and a flow forming process is performed on the centre region 102 and the inboard end 103 for obtaining a straight rim profile 402.

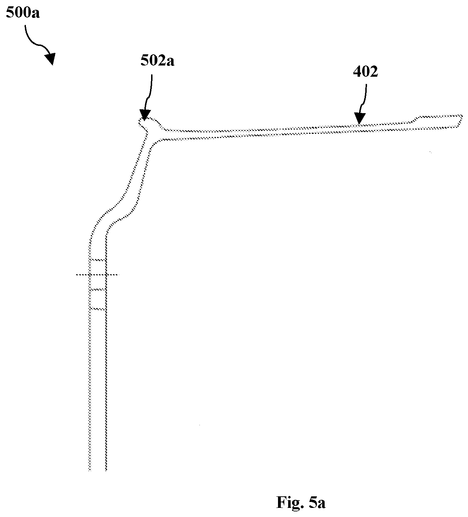

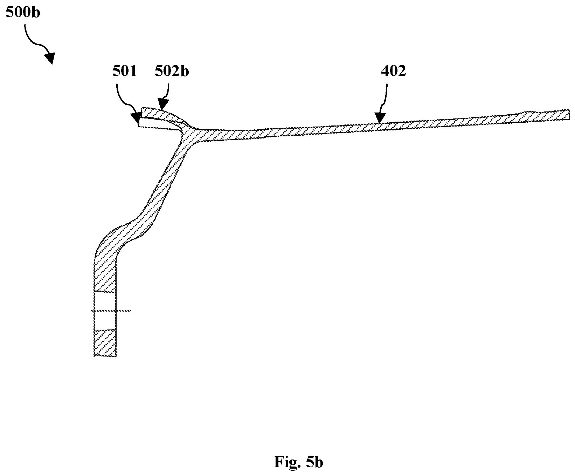

Fig.5 illustrates a sectional view of hoop 500 after spinning process of outer end 405 of straight rim profile 402, according to an embodiment. A spinning process and a forming process are performed on the outer end 405 of the straight rim profile 402 for obtaining an outboard flange 502.

In an embodiment, a press forming process is performed on the outer end 405 of the straight rim profile 402 for obtaining an outboard flange 502.

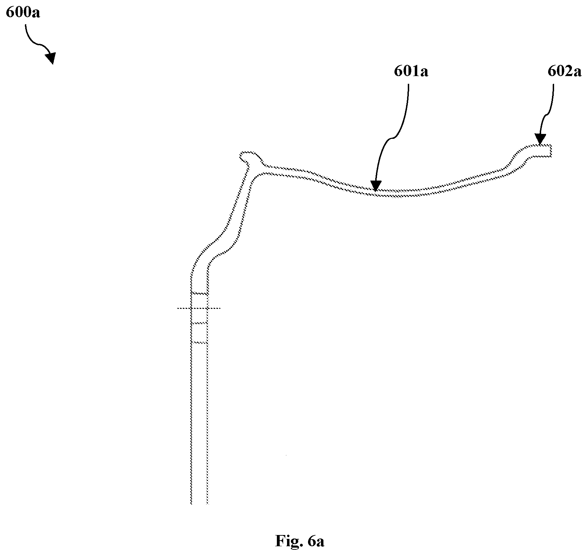

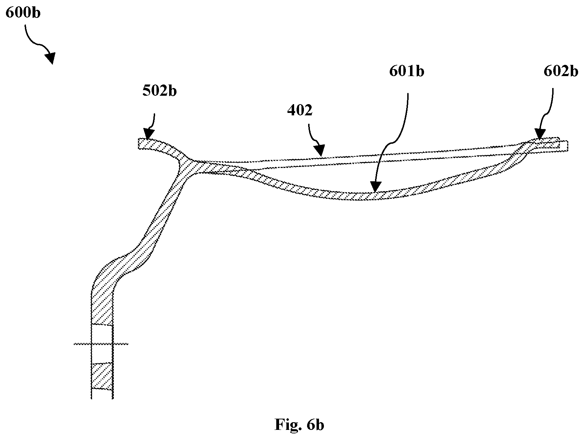

Fig.6 illustrates a sectional view of hoop 600 after spinning process of straight rim profile 402, according to an embodiment. A spinning process is performed on the straight rim profile 402 for obtaining a concave rim profile 601 and a preform inboard flange 602.

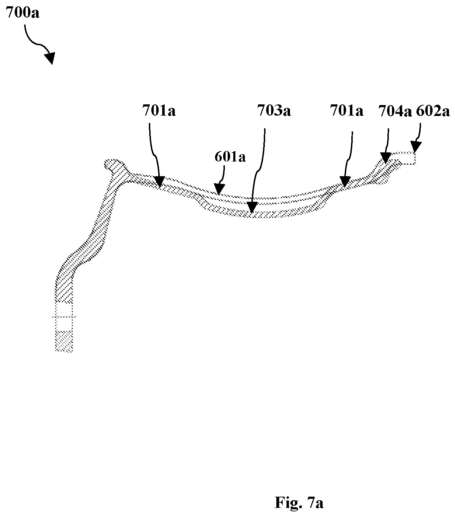

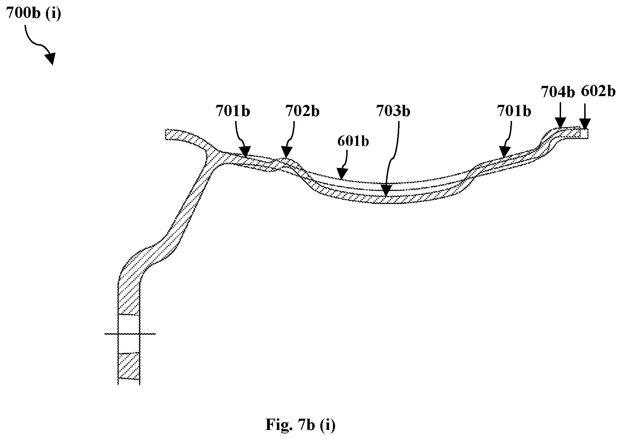

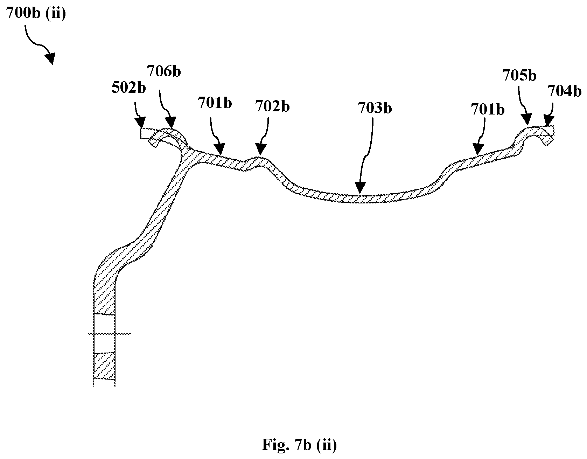

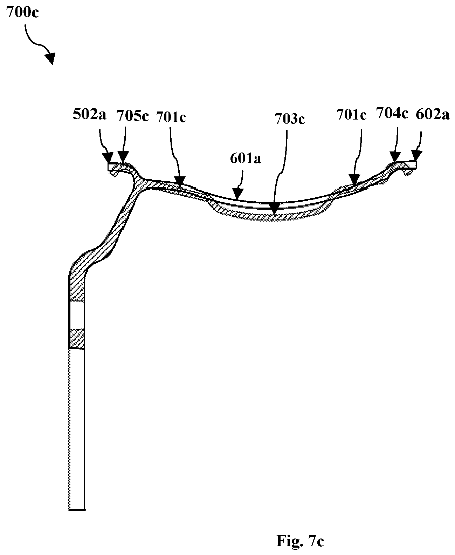

Fig.7 illustrates sectional view of hoop 700 after spinning process of concave rim profile 601, according to an embodiment. The spinning process is performed on the concave rim profile for obtaining bead seats 701, and a well region 703. A forming process is performed on the preform inboard flange 602 for obtaining an inboard flange 704. The bead seats 701 include an outboard bead seat 701 and an inboard bead seat 701.
In an embodiment, a press forming process is performed on the preform inboard flange 602 for obtaining an inboard flange 704.

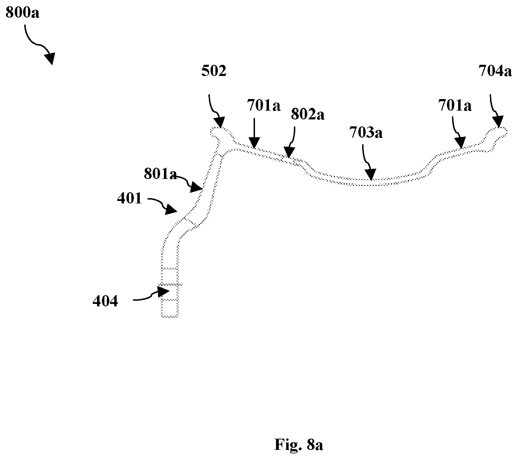

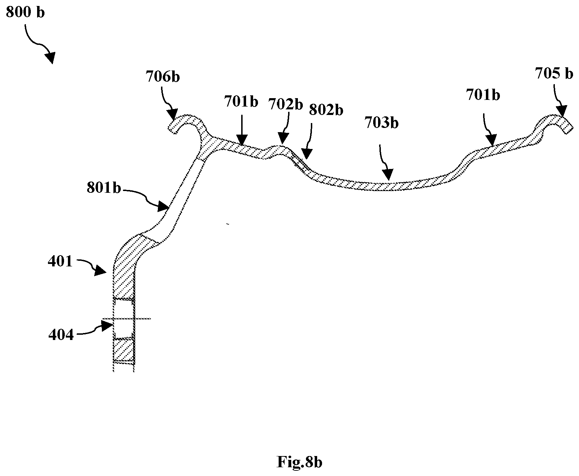

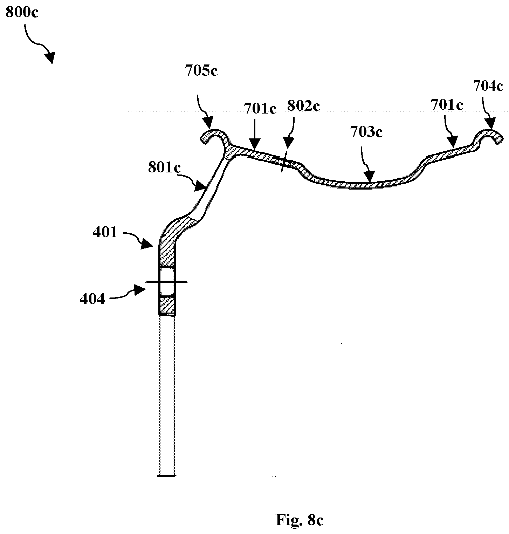

Fig.8 illustrates a sectional view of tubeless wheel 800 with vent holes 801 and valve hole 802, according to an embodiment. A plurality of vent holes 801 is provided on the disc profile 401 and a valve hole 802 is provided on the outboard bead seat 701. In an embodiment, the plurality of vent holes 801 on the disc profile 401 and a valve hole 802 on the outboard bead seat 701 is obtained using a punching process.

A main advantage of the present invention is that it provides a process for manufacturing a single piece tubeless vehicle wheel.

Another advantage of the present invention is that the process uses a single hoop for manufacturing tubeless vehicle wheel.

Yet another advantage of the present invention is that the process for manufacturing a single piece tubeless vehicle wheel uses simple methods.

Still another advantage of the present invention is that the process for manufacturing a tubeless vehicle wheel eliminates stress concentration due to welding.

## Claims

1. A process for manufacturing tubeless vehicle wheel without welding comprising the steps of,
providing a hoop (100) having an outboard end (101), a centre region (102) and an inboard end (103) made of metallic materials;
spinning the outboard end (101) of the hoop (100) to obtain a disc region (202); spinning disc end (203) of the disc region (202) to obtain a preform nave region (301);
**characterized in that**
forming the disc region (202) to obtain a disc profile (401) and a nave region (403); forming the centre region (102) and inboard end (103) of the hoop (100) to obtain a straight rim profile (402);
spinning outer end (405) of the straight rim profile (402);
press forming the outer end (405) to obtain an outboard flange (502a);
spinning the straight rim profile (402) to obtain a concave rim profile (601a) with a preform inboard flange (602a);
spinning the concave rim profile (601a) to obtain bead seats (701a) and a well region (703a);
press forming the preform inboard flange (602a) to obtain an inboard flange (704a); and
providing a plurality of vent holes (801a) at the disc profile (401a) and a valve hole (802a) at the bead seat (701a).

2. The process as claimed in claim 1, wherein a plurality of bolt holes (404) is provided at the nave region (403).

3. The process as claimed in claim 2, wherein the plurality of bolt holes (404) are obtained using a punching process.

4. The process as claimed in claim 1, wherein vent holes (801a) and the valve hole (802a) are obtained using a punching process.

5. The process as claimed in claim 1, wherein the disc profile (401), nave region (403) and the straight rim profile (402) are obtained using a flow forming process.

## Patentansprüche

1. Verfahren zur Herstellung eines schlauchlosen Fahrzeugrades ohne Schweißverbindung,
umfassend die Schritte:
Bereitstellend eines metallischen Rings (100) mit einem Außenende (101), einem Mittelbereich (102) und einem Innenende (103);
Drückformend das Außenende (101) des Rings (100), um einen Scheibenbereich (202) zu erzeugen;
Drückformend ein Scheibenende (203) des Scheibenbereichs (202), um einen vorgeformten Nabenbereich (301) zu bilden;
**dadurch gekennzeichnet, dass**
Formend den Scheibenbereich (202), um ein Scheibenprofil (401) und einen Nabenbereich (403) auszubilden;
Formend den Mittelbereich (102) und das Innenende (103) des Rings (100), um ein gerades Felgenprofil (402) zu erzeugen;
Drückformend ein äußeres Ende (405) des geraden Felgenprofils (402);
Pressformend das äußere Ende (405), um einen Außenflansch (502a) zu bilden;
Drückformend das gerade Felgenprofil (402), um ein konkaves Felgenprofil (601a) mit einem vorgeformten Innenflansch (602a) zu erzeugen;
Drückformend das konkave Felgenprofil (601a), um Sitzbereiche (701a) und einen Tiefbettbereich (703a) zu bilden;
Pressformend den vorgeformten Innenflansch (602a), um einen Innenflansch (704a) zu bilden; sowie
Herstellend mehrere Entlüftungsöffnungen (801a) im Scheibenprofil (401) und eine Ventilöffnung (802a) im Sitzbereich (701a).

2. Verfahren nach Anspruch 1, wobei mehrere Bolzenlöcher (404) im Nabenbereich (403) vorgesehen sind.

3. Verfahren nach Anspruch 2, wobei die mehreren Bolzenlöcher (404) durch einen Stanzvorgang hergestellt werden.

4. Verfahren nach Anspruch 1, wobei die Entlüftungsöffnungen (801a) und die Ventilöffnung (802a) durch einen Stanzvorgang hergestellt werden.

5. Verfahren nach Anspruch 1, wobei das Scheibenprofil (401), der Nabenbereich (403) und das gerade Felgenprofil (402) durch ein Fließformverfahren hergestellt werden.

## Revendications

1. Procédé de fabrication d'une roue de véhicule sans chambre à air sans soudure, comprenant les étapes suivantes :
Fournissant un anneau métallique (100) ayant une extrémité externe (101), une zone centrale (102) et une extrémité interne (103) ;
Formant par repoussage l'extrémité externe (101) de l'anneau (100) afin d'obtenir une zone de disque (202) ;
Formant par repoussage une extrémité de disque (203) de la zone de disque (202) afin d'obtenir une zone de moyeu préformée (301) ;
**caractérisé en ce que**
Formant la zone de disque (202) afin d'obtenir un profil de disque (401) et une zone de moyeu (403) ;
Formant la zone centrale (102) et l'extrémité interne (103) de l'anneau (100) afin d'obtenir un profil de jante droit (402) ;
Formant par repoussage une extrémité externe (405) du profil de jante droit (402) ;
Formant par pressage l'extrémité externe (405) afin d'obtenir une bride externe (502a);
Formant par repoussage le profil de jante droit (402) afin d'obtenir un profil de jante concave (601a) comportant une bride interne préformée (602a) ;
Formant par repoussage le profil de jante concave (601a) afin d'obtenir des portées de talon (701a) et une zone de creux (703a) ;
Formant par pressage la bride interne préformée (602a) afin d'obtenir une bride interne (704a) ; et
en réalisant plusieurs orifices de ventilation (801a) dans le profil de disque (401) et un orifice de valve (802a) au niveau de la portée de talon (701a).

2. Procédé selon la revendication 1, dans lequel plusieurs trous de boulons (404) sont prévus dans la zone de moyeu (403).

3. Procédé selon la revendication 2, dans lequel les plusieurs trous de boulons (404) sont réalisés par poinçonnage.

4. Procédé selon la revendication 1, dans lequel les orifices de ventilation (801a) et l'orifice de valve (802a) sont réalisés par poinçonnage.

5. Procédé selon la revendication 1, dans lequel le profil de disque (401), la zone de moyeu (403) et le profil de jante droit (402) sont fabriqués par formage incrémental à flux de matière.
